# EUROPÄISCHE PATENTSCHRIFT

(11) **EP 0 545 199 B1**
(45) Veröffentlichungstag und Bekanntmachung des Hinweises auf die Patenterteilung: **16.10.1996**
(21) Anmeldenummer: 92119914.7
(22) Anmeldetag: 23.11.1992
(51) Int. Cl.: C05D 3/02, C05F 5/00, C05F 17/00

(54) **Verwendung von Pilzmyzel als Bodenhilfsstoff**
Use of fungal mycelia as soil conditioner
Utilisation du mycelium comme agent d'amélioration du sol

(30) Priorität: 27.11.1991 DE 4138883
(43) Veröffentlichungstag der Anmeldung: 09.06.1993
(73) Patentinhaber: HOECHST AKTIENGESELLSCHAFT, 65926 Frankfurt am Main (DE)
(72) Erfinder: Ebert, Hildegard, Dr., W-6232 Bad Soden/Ts. (DE); Schräpler, Winfried, W-6229 Schlangenbad (DE)

(56) Entgegenhaltungen:
- EP-A- 0 337 483
- EP-A- 0 341 736
- EP-A- 0 486 932
- CHEMICAL ENGINNEERING, Band 83, Nr. 17, 02. August 1976; Seite 44
- CHEMICAL ABSTRACTS, Band 114, Nr. 9, 04. März 1991, Columbus, OH (US); abstract no. 80554u, YAMADA, KOJI ET AL "Manufacture of soil amendments using animal wastes and calcium oxide" Seite 622; & JP-A-2267181

## Beschreibung

Bodenhilfsstoffe sind laut Düngemittelgesetz vom 15.11.1977 "Stoffe ohne wesentlichen Nährstoffgehalt, die den Boden biologisch, chemisch oder physikalisch beeinflussen, seinem Zustand oder die Wirksamkeit von Düngemitteln verbessern, insbesondere Bodenimpfmittel, Bodenkrümler, Bodenstabilisatoren (chem. Erhärtungsmittel), Gesteinsmehle".

Eine Verbesserung der Bodenstruktur (Krümelung, Lockerungsgrad, Gasdurchlässigkeit, Wasserbindungsfähigkeit) bewirken z.B. Kalk, Humus, Torfmull, Ligninderivate, Alginate, Pektine, Eisensulfate, Ca-Polysulfid, Sägemehl, Silicate, ggf. mit Wasserglas versetzter Rotschlamm (Chem. Techn. 29 (1977) 576 u. Chem. Ind. 27 (1975) 351). Größere Bedeutung haben synthetische Produkte, vor allem teilweise hydrolysiertes Polyacrylnitril, Vinylacetat-Copolymerisate, Polyvinylpropionat, Butadien-Styrol-Copolymerisate, Carboxymethylcellulose und organische Ferriammoniumkomplexe (Römpp, Chemie Lexikon, (1990)).

In dem Europäischen Patent 121 493 wird ein Verfahren zur Verbesserung der Vegetation im Boden mit Hilfe einer Mischung aus Polybutadien und Pilzmyzel beschrieben. Die Zugabe des Pilzmyzels ermöglicht eine Reduzierung des Anteils an Polybutadien. Für die Behandlung saurer Böden wird eine zusätzliche Beimischung von Kalk (90 - 95 % CaCO₃) empfohlen.

Die vorliegende Erfindung betrifft einen Bodenhilfsstoff aus Pilzmyzel, das mit Ätzkalk (CaO) versetzt wurde.

Eine Verwertung von Pilzmyzel als Bodenhilfsstoff ist möglich, wenn das Pilzmyzel mit mindestens 10 % Ätzkalk versetzt wird. Eine Zugabe von mehr als 20 % Ätzkalk kann zwar durchgeführt werden, ist jedoch aus Kostengründen nicht mehr sinnvoll. Bevorzugt werden 10-15 %, insbesondere 10-11 % Ätzkalk zugesetzt. Ätzkalk enthält etwa 92 - 99,5 % CaO (Wuhrer in Chem. Ing. Techn. 1958, S. 19 - 30). Dadurch wird die Trockenmasse des Produktes auf einen Wert erhöht, der zwischen 40 und 60 % liegt.

Als Pilzmycel kommen bevorzugt Pilze in Frage, die zu der künstlichen Gruppe der Deuteromycetes, auch Fungi imperfecti genannt, zusammengefaßt werden; insbesondere Vertreter der Gattung Moniliales. Größere Mengen an Pilzmyzel entstehen vor allem bei der biotechnologischen Gewinnung von Antibiotika, Enzymen oder anderen Metaboliten.

Der Pilz Acremonium chrysogenum (früher Cephalosporium acremonium), der das Antibiotikum Cephalosporin C produziert wird zur großtechnischen Gewinnung des Antibiotikums eingesetzt. Es ist ausgesprochen erstrebenswert, die dabei anfallende Pilzbiomasse zu verwerten, um auf diese Weise den Abfall zu reduzieren.

Außerdem betrifft die Erfindung ein Verfahren zur Herstellung dieses Bodenhilfsstoffes. Der aus Pilzmyzel und Ätzkalk hergestellte Bodenhilfsstoff hat den Vorteil, weitestgehend frei von Keimen und vollkommen frei von Antibiotika zu sein. Er kann ohne die Zugabe eines weiteren synthetischen Produkts hergestellt werden.

Zur Herstellung des Produkts werden Pilzmyzel und Nährmedium durch Filtration getrennt, wobei vorteilhaft Vakuumdrehfilter oder ähnliche Vorrichtungen angewendet werden können. Zweckmäßig setzt man dabei ein Filterhilfsmittel, z.B. ®Filterperl von der Fa. Perlite, zu. Filterperl ist künstlich hergestelltes Kieselgur und hat den Vorteil, nicht wie natürliche Kieselerden zu stauben. Der dabei entstehende Filterkuchen wird noch im feuchten Zustand mit dem Ätzkalk vermischt, dazu können Mischschnecken oder sonstige geeignete Maschinen eingesetzt werden.

Man erhält auf diese Weise ein lagerfähiges Produkt von krümeliger Konsistenz, das leicht mit Miststreuern ausgebracht werden kann. Es ist insbesondere für saure Böden geeignet. Die Aufwandmenge dieses Bodenhilfsstoffs beträgt ca. 10 - 15 t/ha.

Durch die Kalkzugabe steigt der pH-Wert des Bodenhilfsstoffes auf 10-12 an und bewirkt dadurch eine Stabilisierung des Myzelkuchens, d.h. das Produkt ist deponierfähig und läßt sich wie Hausmüll lagern.

Das hellgraue bis graugelbe krümelige Produkt kann sofort verwendet, nach Abdeckung über längere Zeit gelagert werden oder, nach der Zugabe von Zuschlagstoffen, kompostiert werden.

Eine Analyse des Produktes ergab, daß die Schwermetallgehalte weit unter den Werten von Klärschlamm und ebenfalls weit unter den Durchschnittwerten von landwirtschaftlich genutzen Böden liegen.

Die folgenden Beispiele dienen zur Erläuterung der Erfindung, ohne daß diese darauf beschränkt wäre.

### Beispiele

1. Aus dem Myzel von Acremonium chrysogenum erhaltener Filterkuchen wurde mittels einer Mischschnecke mit 11 % technischem Ätzkalk vermischt. Man erhält auf diese Weise eine krümelige Masse folgender Zusammensetzung:

| | in der Frischmasse: |
|---|---|
| Trockenmasse | 44,1 % |
| Stickstoff | 1,38 % |
| Phosphor P₂O₅ | 0,36 % |
| Kalium K₂O | 0,064 % |
| Calcium CaO | 11,1 % |
| Magnesium MgO | 0,11 % |

2. Vergleich der Zusammensetzung von Pilzmyzel aus Acremonium chrysogenum, das mit Ätzkalk versetzt wurde (CPC-Myzel) mit Klärschlamm und landwirtschaftlich genutzten Böden:

| | | in der Trockenmasse: | |
|---|---|---|---|
| | CPC-Myzel | Klärschlamm | Landwirtschaftl. genutzt. Böden |
| Blei | < 2 mg/kg | (1200) | (38) |
| Cadmium | < 0,2 mg/kg | ( 20) | (0,35) |
| Chrom | 10 mg/kg | (1200) | (36) |
| Kupfer | 13 mg/kg | (1200) | (22) |
| Nickel | 1,5 mg/kg | ( 200) | (34) |
| Quecksilber | < 0,02 mg/kg | ( 25) | (0,12) |
| Zink | 25 | (3000) | (90) |
| pH-Wert | 12,5 | | |

Organische Substanz (Glühverlust) in der Trockenmasse 9,76 %.
3. Aus dem Myzel von Acremonium chrysogenum erhaltener Filterkuchen wurde mittels einer Mischschnecke mit 11 % technischem Ätzkalk vermischt. Das erhaltene Produkt (CPC-Myzel) wurde zusammen mit verschiedenen Zuschlagstoffen zur Herstellung von Kompost verwendet:
a) 100 t CPC-Myzel + 100 t Klärschlamm (40 % TM) + 100 t Rindenabfall
   Kompostmiete 30 m lang, 2 m hoch
   Kompostierungszeit: Februar bis September 91.
   Mehrfaches Umsetzen der Miete.
b) 500 t CPC-Myzel + 500 t Kartoffeln
   Kompostmiete 45 m lang, 2 m hoch
   Kompostierungszeit: Januar bis September 91.
c) 340 t CPC-Myzel + 400 t verschiedener Abfallstoffe (Stroh, alter Kompost, Siloabdeckungen, Getreideabfälle, Mutterboden)
   Kompostmiete 30 m lang, 2 m hoch
   Kompostierungszeit: Mai bis September 91.

## Patentansprüche

1. Bodenhilfsstoff, dadurch gekennzeichnet, daß er ein mit mindestens 10 % Ätzkalk versetztes Pilzmyzel enthält.

2. Bodenhilfsstoff gemäß Anspruch 1, dadurch gekennzeichnet, daß der Anteil an Ätzkalk 10-20 %, vorzugsweise 10 - 15 %, insbesondere 10 - 11 % beträgt.

3. Bodenhilfsstoff gemäß Anspruch 1, dadurch gekennzeichnet, daß das Pilzmyzel von Deuteromyceten stammt.

4. Bodenhilfsstoff gemäß Anspruch 1, dadurch gekennzeichnet, daß das Pilzmyzel von Acremonium chrysogenum stammt.

5. Verfahren zur Herstellung eines Bodenhilfsstoffes gemäß einem der Ansprüche 1 - 4, dadurch gekennzeichnet, daß man das bei der Fermentation von Mikroorganismen erhaltene Pilzmycel, ggf. unter Zusatz eines Filterhilfsmittels, abtrennt und den Filterkuchen mit 10 - 20 %, vorzugsweise 10 - 15 %, insbesondere 10 - 11 % Ätzkalk innig vermengt.

6. Verfahren zur Verbesserung der Bodenqualität, dadurch gekennzeichnet, daß ein Bodenhilfsstoff gemäß einem der Ansprüche 1 - 4 eingesetzt wird.

7. Verfahren zur Verbesserung der Bodenqualität, dadurch gekennzeichnet, daß zwischen 10 t und 15 t/ha Bodenhilfsstoff gemäß einem der Ansprüche 1 - 4 aufgetragen werden.

8. Verfahren zur Herstellung von Kompost, dadurch gekennzeichnet, daß ein Bodenhilfsstoff gemäß einem der Ansprüche 1 - 4 mit Zuschlagstoffen versetzt und kompostiert wird.

9. Substrat, das einen Bodenhilfsstoff gemäß einem der Ansprüche 1 - 4 und andere Zusätze enthält.

10. Verwendung eines Bodenhilfsstoffes gemäß einem der Ansprüche 1 - 4 zur Verbesserung der Bodenqualität.

## Claims

1. A soil adjuvant, which comprises a fungal mycelium treated with at least 10 % of quicklime.

2. The soil adjuvant as claimed in claim 1, wherein the amount of quicklime is 10-20 %, preferably 10-15 %, in particular 10-11 %.

3. The soil adjuvant as claimed in claim 1, wherein the fungal mycelium is derived from Deuteromycetes.

4. The soil adjuvant as claimed in claim 1, wherein the fungal mycelium is derived from Acremonium chrysogenum.

5. A process for the preparation of a soil adjuvant as claimed in any one of claims 1 - 4, which comprises separating the fungal mycelium obtained in the fermentation of microorganisms, if appropriate with addition of a filtering auxiliary, and intimately mixing the filter cake with 10-20 %, preferably 10-15 %, in particular 10-11 %, of quicklime.

6. A process for improving the soil quality, which comprises the use of a soil adjuvant as claimed in any one of claims 1 - 4.

7. A process for improving the soil quality, which comprises applying soil adjuvant as claimed in any one of claims 1 - 4 in amounts of between 10 t and 15 t/ha.

8. A process for producing compost, which comprises treating a soil adjuvant as claimed in any one of claims 1 - 4 with additives and composting the mixture.

9. A substrate comprising a soil adjuvant as claimed in any one of claims 1 - 4 and other additives.

10. The use of a soil adjuvant as claimed in any one of claims 1 - 4 for improving the soil quality.

## Revendications

1. Amendement, caractérisé en ce qu'il contient un mycélium additionné d'au moins 10 % de chaux vive.

2. Amendement selon la revendication 1, caractérisé en ce que la proportion de chaux vive va de 10 à 20 %, de préférence de 10 à 15 % et en particulier de 10 à 11 %.

3. Amendement selon la revendication 1, caractérisé en ce que le mycélium provient de deutéromycètes.

4. Amendement selon la revendication 1, caractérisé en ce que le mycélium provient *d'Acremonium chrysogenum.*

5. Procédé pour la production d'un amendement selon l'une des revendications 1 à 4, caractérisé en ce que l'on sépare, éventuellement avec addition d'un adjuvant de filtration, du mycélium obtenu lors de la fermentation de microorganismes, et on mélangé intimement le gâteau de filtration avec 10-20 %, de préférence 10-15 %, en particulier 10-11 % de chaux vive.

6. Procédé pour l'amélioration de la qualité du sol, caractérisé en ce que l'on utilise un amendement selon l'une des revendications 1 à 4.

7. Procédé pour l'amélioration de la qualité du sol, caractérisé en ce que l'on applique entre 10 et 15 t/ha d'un amendement selon l'une des revendications 1 à 4.

8. Procédé pour la production de compost, caractérisé en ce que l'on ajoute des additifs à un amendement selon l'une des revendications 1 à 4, et on le transforme en compost.

9. Substrat contenant un amendement selon l'une des revendications 1 à 4 et d'autres additifs.

10. Utilisation d'un amendement selon l'une des revendications 1 à 4, pour l'amélioration de la qualité du sol.
